# EUROPEAN PATENT SPECIFICATION

(11) **EP 1 915 428 B1**
(45) Date of publication and mention of the grant of the patent: **21.04.2010**
(21) Application number: 07804109.2
(22) Date of filing: 04.09.2007
(51) Int. Cl.: C09B 43/40, C09B 69/00, C09D 11/00

(54) **PROCESS, COMPOUND, INK AND USE**
VERFAHREN, VERBINDUNG, TINTE UND VERWENDUNG
PROCÉDÉ, COMPOSÉ, ENCRE ET UTILISATION

(30) Priority: 09.09.2006 GB 0611754; 18.04.2007 GB 0707425
(43) Date of publication of application: 30.04.2008
(73) Proprietor: FUJIFILM Imaging Colorants Limited, Blackley, Manchester M9 8ZS (GB)
(72) Inventor: WRIGHT, Gavin, Manchester M9 8ZS (GB)
(74) Representative: Parlett, Peter Michael
(86) International application number: PCT/GB2007/003303
(87) International publication number: WO 2008/029097

(56) References cited:
- EP-A- 0 265 857
- GB-A- 1 208 346
- GB-A- 1 377 190
- US-A- 3 852 029
- US-A- 3 889 271
- US-A1- 2005 051 052
- DATABASE CA [Online] CHEMICAL ABSTRACTS SERVICE, COLUMBUS, OHIO, US; 28 February 1989 (1989-02-28), JABLONSKI, JERZY ET AL JABLONSKI, JERZY ET AL: "Black azo dye mixtures for paper pulp Black azo dye mixtures for paper pulp" XP002455069 retrieved from STN Database accession no. 1990:614143 cited in the application & PL 146 482 B (OSRODEK BADAWCZO-ROZWOJOWY PRZEMYSLU BARWNIKOW "ORGANIKA", POL. OSRODE) 28 February 1989 (1989-02-28)

## Description

This invention relates to mono azo compounds and salts thereof which are useful as colorants, to inks (especially but not exclusively ink jet printing inks) containing said compounds or salts thereof, to a process for printing said ink on a substrate and to the use of said compounds or salts thereof for preparing ink jet printing inks.

Ink jet printing (hereinafter IJP) is a non-impact printing technique in which droplets of ink are ejected through a fine nozzle onto a substrate without bringing the nozzle into contact with the substrate.

There are many demanding performance requirements for colorants and inks used in IJP. For example, they desirably provide sharp, non-feathered images having good water-fastness, light-fastness, ozone-fastness and optical density. The inks are often required to dry quickly when applied to a substrate to prevent smudging, but they should not form a crust over the tip of an ink jet nozzle because this will tend to reduce print quality and in extreme cases may prevent the printer from printing. The inks are preferably also stable to storage over time without decomposing or forming a precipitate which could block the fine nozzle. It is also desirable that the inks are be able to provide prints which are resistant towards humidity, especially humidity assisted migration of the colorant causing a reduction in print density and print quality.

United States patent publication US 2005/0051052 discloses self assembling dyes which contain a urea link and a chromaphore group.

Japanese patent publication 58-174464 discloses ink jet printing inks containing azo colorants. In JP 58-174464 the colorants contain an azo group and a urea group which are each attached to a different benzene ring in a naphthylene group.

Polish patents PL146482 and PL146807 describe a mono azo dye containing a urea linkage. This dye is not disclosed as being useful for ink jet printing inks.

We have found that certain azo compounds are particularly useful as colorants for IJP inks and that they provide one or more of the aforementioned advantageous properties.

According to a first aspect of the present invention there is provided a process for printing an image on a substrate comprising applying to the substrate an ink comprising a medium and a mono azo compound of Formula (1) or a salt thereof according to claim 1 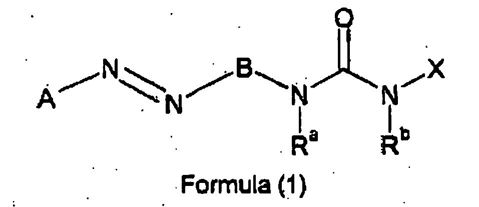 wherein:
- A and X: are independently optionally substituted aryl or heteroaryl;
- B: is independently optionally substituted arylene or heteroarylene, in either case comprising a phenylene ring which is attached to the -N=N- and -NR^{a}- groups in the compound of Formula (1) or a salt thereof in the para positions;
- R³ and R^{b}: are independently H, optional substituted alkyl or optionally substituted aryl;
the compound of Formula (1) or a salt thereof is soluble in water at a temperature of 20°C and has from 1 to 10 groups selected from polyethylene oxide, phosphonic acid, sulfonic acid, and carboxylic acid groups.; and
the ink is applied to the substrate by means of an ink jet printer.

Where appropriate and unless otherwise indicated the words "a" and "an" as used in the description of the present invention mean "one or more". Thus, for example a mono azo compound means one or more mono azo compounds.

A may be either polycyclic (e.g. naphthyl) or monocyclic (e.g. phenyl).

Preferred polycyclic heteroaryl groups comprise a phenyl ring condensed with a 5- or 6- membered ring containing one or more nitrogen, sulphur, oxygen or phosphorous atoms in the 5- or 6- membered ring (e.g. an indole group).

Preferred monocyclic heteroaryl groups are those comprising a 5- or 6- membered ring containing one or more nitrogen, sulphur, oxygen or phosphorus atoms. Preferred examples include pyridine, pyrimidine, pyrazole, pyrrole, imidazole, furan, thiadiazole, triazole and thiophene.

In one embodiment, A is or comprises a 5- or 6- membered ring containing one or more sulfur atoms in the ring (especially thiazole and benzothiazole).

In another embodiment, A is or comprises a 5- or 6- membered ring containing two or more nitrogen atoms in the ring (especially imidazole and pyrazole).

Preferably, A is aryl.

Preferred polycyclic aryl groups include anthracyl, pyrenyl, phenanthrenyl and especially naphthyl. The preferred monocyclic aryl group is phenyl.

It is especially preferred that A is either naphthyl or phenyl, more preferably naphthyl.

When A is naphthyl, the naphthyl group may be attached to the -N=N-group in the compound of Formula (1) or a salt thereof in the 1-naphthyl position but is more preferably attached in the 2-naphthyl position.

More preferably, when A is naphthyl, it is a naphthyl group of Formula (2): 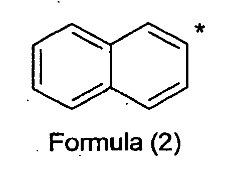 which carries up to 4 substituents, wherein the asterisk (*) represents the point of attachment of the naphthyl group to the -N=N- group in the compound of Formula (1) or a salt thereof.

A may be substituted with one or more substituents, which may be the same or different.

Preferred optional substituents which may be attached to the group represented by A include optionally substituted alkyl, alkoxy, amine, amide, ester, ketone and thioether groups, halo, acid, hydroxy, nitro, cyano and -CF₃ groups.

Preferably, the optionally substituted alkyl group is an optionally substituted C₁₋₈ alkyl group, more preferably an optionally substituted C₁₋₄ alkyl group.

Preferably, the optionally substituted alkoxy group is an optionally substituted C₁₋₈-alkoxy group, more preferably an optionally substituted C₁₋₄-alkoxy group.

Preferably, the optionally substituted amine group is of the formula -NR¹R² wherein R¹ and R² are each independently H or optionally substituted alkyl, aryl or heteroaryl, or R¹ and R² together with the nitrogen atom to which they are attached form an optionally substituted 5- or 6- membered ring (e.g. a piperidine, pyrrolidone, pyridine, piperizine or morpholine ring).

Preferably, the optionally substituted amide group is of the formula -NHC(O)NR¹R², -C(O)NR¹R², -S(O)₂NR¹R², -NHS(O)₂R³ or -NHC(O)R³, wherein R³ is H or optionally substituted alkyl, aryl or heteroaryl and R¹ and R² are as hereinbefore defined.

Preferred optionally substituted ester groups are of the formula -C(O)OR⁴ or -S(O)₂OR⁴, wherein R⁴ is optionally substituted alkyl, aryl or heteroaryl.

Preferred optionally substituted ketone groups are of the formula -C(O)R⁴ wherein R⁴ is as hereinbefore defined.

Preferred optionally substituted thioether groups are of the formula -SR⁴, wherein R⁴ is as hereinbefore defined.

Optionally substituted alkyl, alkoxy, amine, amide, ester, ketone or thioether substituents may be substituted with one or more halo, amino, C₁₋₄-alkoxy, hydroxy, sulfonic acid, carboxylic acid and phosphonic acid groups.

Preferred halo groups are Cl, F and Br.

Preferred acid groups include carboxylic acid, phosphonic acid and especially sulfonic acid.

Preferably, when the compound of Formula (1) or a salt thereof contains a hydroxy group the hydroxy group is an alkyl hydroxy group, more preferably a C₁₋₈ alkyl hydroxy group.

Preferably, A is substituted with at least one group selected from carboxylic acid, phosphonic acid, sulphonamide, polyethylene oxide and sulfonic acid groups. Preferably A has from 1 to 3 of such groups.

Preferably, A is substituted with at least one acid group.

Preferably, A is substituted with at least one sulfonic acid group.

More preferably, A is substituted with from 1 to 3, especially 2 or 3 and more especially 3 sulfonic acid groups.

Preferably, A is a naphthyl group substituted with from 1 to 3 sulfonic acid groups.

Preferably, A has no substituents other than sulfonic acid groups.

Preferably, A is of Formulae (3), (4) or (5): 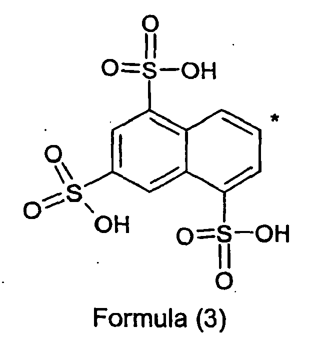 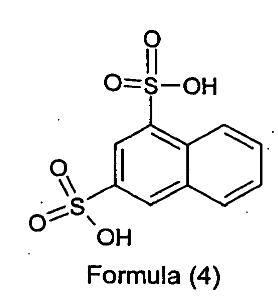 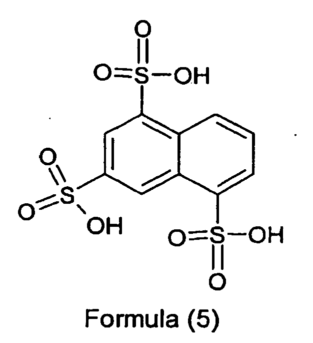 wherein the asterisk (*) represents the point of attachment to the -N=N- group in the compound of Formula (1) or a salt thereof.

The group represented by X may be any of the any of the groups hereinbefore described for A. X may be substituted with one or more substituents. The substituents may be any of those hereinbefore described for the group represented by A.

Preferably, X is aryl, more preferably X is phenyl.

We have surprisingly found that further improved compounds of Formula (1) and salts thereof are obtained when X has at least one phosphonic, acid group. In particular, these compounds provide prints which exhibit improved humidity resistance.

Preferably, the group represented by X has at least one phosphonic acid group, more preferably X has from 1 to 3 phosphonic acid groups, especially preferably X has only one phosphonic acid group. Preferably, the phosphonic acid group is directly attached to X.

In a preferred embodiment, X is a phenyl group substituted with a phosphonic acid group in the meta position with respect to the point of attachment of the phenyl group to the -NR^{b}- group in the compound of Formula (1) or a salt thereof.

Preferably, X has no substituents other than phosphonic acid groups.

Preferably, X is of Formula (6): 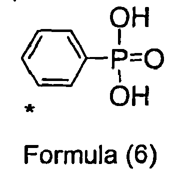 wherein the asterisk (*) represents the point of attachment to the -NR^{b}- group in the compound of Formula (1) or a salt thereof.

Preferably, B is arylene.

The arylene group may be either polycyclic (e.g. naphthylene) or more preferably-monocyclic (e.g. phenylene).

Preferably, B is optionally substituted naphthylene or phenylene, more preferably phenylene.

When B is a heteroarylene group, it preferably comprises a phenylene ring condensed with a 5- or 6- membered ring containing one or more nitrogen, sulphur, oxygen or phosphorus atoms in the 5- or 6- membered ring (e.g. an indole group).

B may be substituted with one or more substituents.

The substituents may be any of those hereinbefore described for the group represented by A.

The optional substituents which may be present on B are preferably selected from C₁₋₄-alkoxy (especially methoxy and ethoxy), C₁₋₄-alkyl (especially methyl), -NHCONH₂, -NHSO₂-C₁₋₄-alkyl (especially -NHSO₂CH₃) carboxylic acid, sulfonic acid and phosphonic acid.

Preferably, B is unsubstituted.

Preferably, B is of Formula (7): 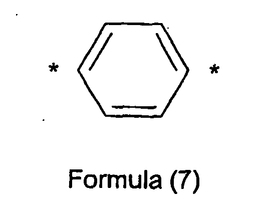 wherein the asterisks (*) represent the points of attachment to the -N=N- and -NR^{a}- group in the compound of Formula (1) or a salt thereof.

Preferably, R^{a} is H or optionally substituted C₁₋₄-alkyl, more preferably H. When R^{a} is not H it may be substituted with one or more substituents. Theses substituents may be any of the substituents hereinbefore described for the group represented by A.

R^{b} may be any of the groups hereinbefore described for R^{a}. The preferences for R^{b} are the same as R^{a}.

Preferably, both R^{a} and R^{b} are H.

It is preferred that A is naphthyl substituted with from 1 to 3 sulfonic acid groups, B is phenylene and X is phenyl.

More preferably A is 2-naphthyl substituted with from 1 to 3 sulfonic acid groups, B is unsubstituted phenylene and X is phenyl having at least one phosphonic acid group.

In addition, it is preferred that both R^{a} and R^{b} are H.

According to a second aspect of the present invention there is provided a mono azo compound of Formula (1) or a salt thereof: 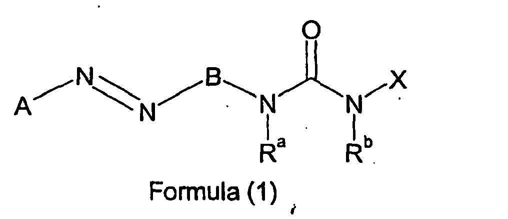 wherein
- A and X: are independently optionally substituted aryl or heteroaryl;
- B: is independently optionally substituted arylene or heteroarylene, in either case comprising a phenylene ring which is attached to the -N=N- and -NR^{a}- groups in the compound of Formula (1) or a salt thereof in the para positions;
- R^{a} and R^{b}: are independently. H, optionally substituted alkyl, or optionally substituted aryl; and
the compound of Formula (1) or salt thereof is soluble In water at a temperature of 20°C and has:
a) from 1 to 10 groups selected from polyethylene oxide, sulphonamide, phosphonic acid, sulfonic acid, and carboxylic acid groups;
b) no fibre reactive groups selected from halo -1, 3, 5-triazinyl, halo-pyrimidyl, beta-halo-propionyl, beta-halo ethyl-sulphonyl, bata-sulfonic acid ethyl-sulfonyl, beta-halo ethylsulfamyl, chloroacetyl amino, beta-sulfonic acid ethyl sulphamyl and vinyl sulphonyl groups; and
c) no hydroxy groups attached to a benzene ring.

The compound of Formula (1) or a salt thereof has no hydroxy groups attached to a benzene ring.

We have surprisingly found that compounds of Formula (1) and salts thereof as defined in the first aspect of the invention which have no hydroxy groups attached to a benzene ring and no fibre reactive groups provide inks having improved ozone fastness and operability in ink jet printing.

In one embodiment the compound or a salt thereof according to the second aspect of the present invention has no phosphonic acid groups.

In this embodiment the compound or a salt thereof preferably has one or more groups selected from sulfonic acid and carboxylic acid groups. Preferably, the compound of Formula (1) or a salt thereof has from 1 to 10 groups, more preferably from 1 to 5 groups which are selected from sulfonic acid and carboxylic acid groups.

In this embodiment it is preferred that the compound of Formula (1) or a salt thereof according to the second aspect of the present invention is any one of the compounds of Formulae (8) to (11) or a salt thereof:

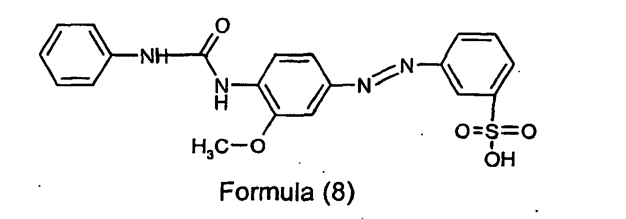

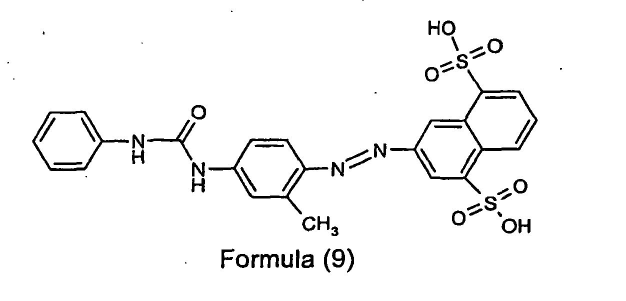

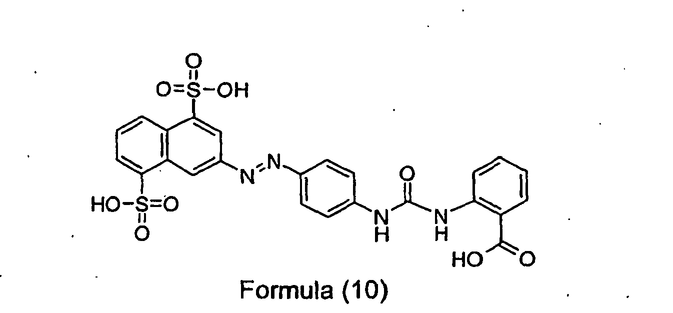

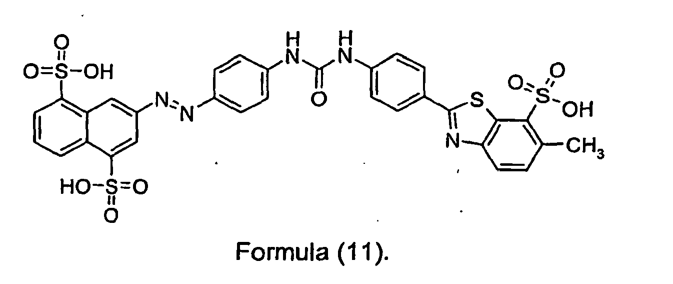

In a preferred embodiment the compound of Formula (1) or a salt thereof according to the second aspect of the present invention has at least one phosphonic acid group. As mentioned hereinbefore the presence of the phosphonic acid group improves the humidity fastness of prints obtained from ink containing the compound of Formula (1) or a salt thereof.

Preferably, the compound of Formula (1) or a salt thereof has from 1 to 6, more preferably from 1 to 3 and especially 1 phosphonic acid group.

As mentioned hereinbefore at least one of the phosphonic acid groups is preferably attached to X and is more preferably directly attached to X.

In addition to having at least one phosphoric acid group the compound of Formula (1) or a salt thereof preferably has one or more (more preferably from 1 to 4) groups selected from sulfonic acid and carboxylic acid groups.

In a preferred embodiment the compound of Formula (1) or a salt thereof is any one of the compounds of Formulae (12) to (15) or a salt thereof: .

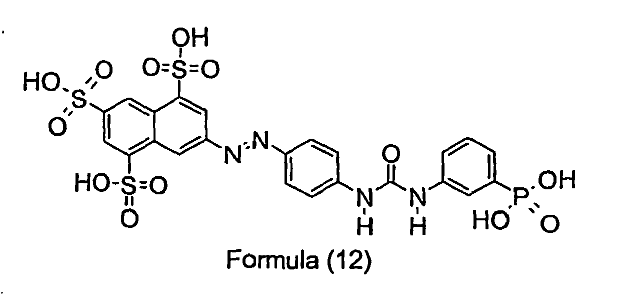

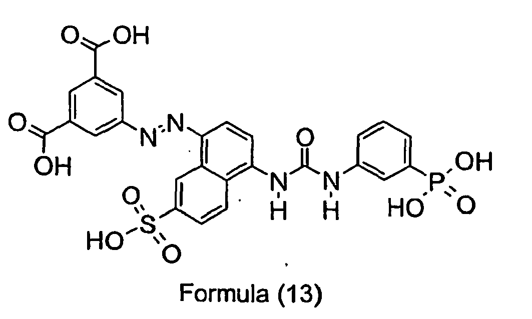

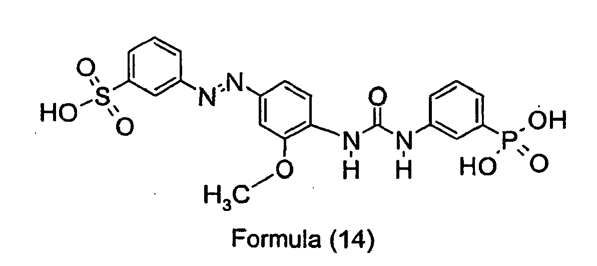

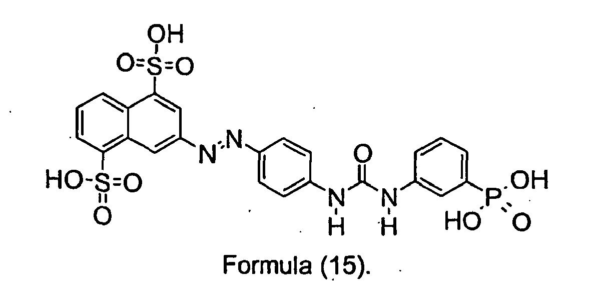

The compounds of Formula (12) to (15) and salts thereof provide inks which when printed exhibit particularly good ozone-fastness and humidity fastness.

The compounds of Formulae (1) and salts thereof, and all other Formulae showing preferred embodiments thereof exist in tautomeric forms other than those shown in this specification and such tautomers are included within the scope and claims of the present invention.

When the compound of Formula (1) contains one or more ionic groups (such as sulfonic acid, phosphonic acid or carboxylic acid) these ionic groups may each independently be in the form of the free acid (e.g. -SO₃H) or more preferably in the form of a salt (e.g. -SO₃Na) Preferably, at least one of the ionic groups present in the compound of Formula (1) is in the form of a salt, more preferably all the ionic groups present in the compound of Formula (1) are in the form of a salt:

Preferred salt forms are for example alkali metal salts (especially lithium, sodium, potassium), ammonium, substituted ammonium and mixed salts thereof.

Preferred ammonium and substituted ammounium salts are ammonium and alkyl or aryl substituted ammonium (e.g. ammonium, alkanolammonium, pyridinium, piperidinium and morpholinium).

It is especially preferred that the compounds of Formula (1) are in the form of a sodium, lithium, potassium or ammonium salt or a mixture thereof.

The compound of Formula (1) or a salt thereof has from 1 to 10, more preferably from 1 to 5 and especially from 2 to 4 groups selected from polyethylene oxide, sulphonamide, phosphonic acid, sulfonic acid, and carboxylic acid groups.

Preferably, the compound of Formula (1) or a salt thereof has from 1 to 10, more preferably from 1 to 5 groups selected from phosphonic acid, sulfonic acid and carboxylic acid groups.

Preferably, the compound of Formula (1) or a salt thereof has at least one, more preferably from 1 to 5 and especially from 1 to 3 sulfonic acid groups.

As mono azo compounds, the compounds of Formula (1) and the salts thereof have no further azo groups in addition to the azo group as represented in the compound of Formula (1).

The compound of Formula (1) or a salt thereof is soluble in water at a temperature of 20°C.

Preferably, the water used to measure the solubility is pure (for example water purified by reverse osmosis, distillation or de-ionization).

Preferably, the compound of Formula (1) or a salt thereof has a solubility in the water of at least 2%, more preferably at least 3% and especially at least 5% by weight at 20°C.

Preferably, the compound of Formula (1) or a salt thereof is yellow, orange or brown in colour. Preferably, inks containing about 5% by weight of the compound of Formula (1) or a salt thereof are yellow in colour.

The compounds and salts thereof as defined in the first aspect of the present invention are useful for preparing inks (especially aqueous IJP inks). These aqueous IJP inks, exhibit particularly good operability in ink jet printers as well as providing prints which have good ozone-fastness.

In a preferred embodiment the compound of Formula (1) or a salt thereof used in the first aspect of the present invention is free from hydroxy groups attached to a benzene ring. More preferably, the compound of Formula (1) is free from hydroxy groups attached to an aryl ring. We have found compounds of Formula (1) and salts thereof which are free from phenolic groups show further improved ozone fastness.

Many of the compounds of Formula (1) and salts thereof have a bright and vivid yellow shade which is ideal as the yellow ink in a trichromatic printing ink set (Cyan, Yellow, Magenta).

The compounds of Formula (1) and salts thereof as defined to the first aspect of the present invention preferably have no fibre reactive groups because such groups tend to reduce the long-term storage stability of inks. The term fibre reactive group is well understood in the art and is used for example in EP 0356014 A1. Fibre reactive groups are capable, under suitable conditions, of reacting with the hydroxy groups present in cellulosic fibres or with the amino groups present in natural fibres to form a covalent linkage between the fibre and the compound. Examples of fibre reactive groups which are preferably not present in the compounds of Formula (1) include: halo -1, 3, 5-triazinyl, halo-pyrimidyl, beta-halo-propionyl, beta-halo ethyl-sulphonyl, beta-sulfonic acid ethyl-sulfonyl, beta-halo ethylsulfamyl, chloroacetyl amino, beta-sulfonic acid ethyl sulphamyl and vinyl sulphonyl groups.

The compounds of Formula (1) and salts thereof may be prepared by the reaction of a compound of Formula (16) or a salt thereof with a compound of Formula X-NR^{b}H or a salt thereof: 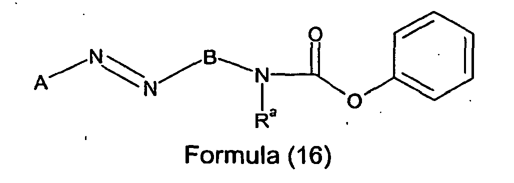 wherein A, B, R^{a}, X and R^{b} are as hereinbefore described. The reaction is preferably performed at a pH of from 5.5 to 7.5, a temperature of from 40 to 60°C, over a period of from 8 to 30 hours.

The compound of Formula (16) or a salt thereof is preferably prepared by the reaction of phenyl chloroformate with a compound of Formula (17) or a salt thereof: 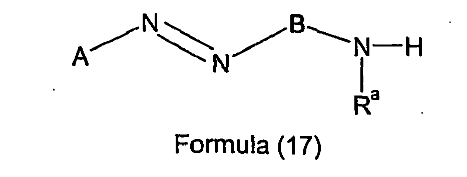 wherein A, B and R^{a} are as hereinbefore defined.

The reaction is preferably performed in a liquid medium comprising water and N-methyl pyrrolidone at a temperature of 0 to 5°C, for a period of 1-5 hours and at a pH of from 5.5 to 7.5. Preferably, the phenyl chloroformate is added dropwise a solution containing the compound of Formula (17) or a salt thereof.

The compound of Formula (17) or a salt thereof is preferably prepared by diazotising a compound of Formula A-NH₂ to give a diazonium salt and coupling the resultant diazonium salt with a compound of Formula B-NR^{a}H, wherein A, B and R^{a} are as hereinbefore defined.

The diazotisation is preferably performed at a temperature below 20°C, more preferably at a temperature from 0°C to 5°C. Preferably, the diazotisation is performed in a liquid comprising water, preferably having a very acidic pH (below 3). Mineral acids (e.g. HCl or H₂SO₄ or mixtures thereof) are typically used to achieve such an acidic pH.

The coupling reaction is preferably performed at a temperature of from 0 to 5°C, typically for a period of 1 to 6 hrs. It is often desirable to add a buffer (e.g. sodium acetate) to adjust the pH to 4 to 5. The coupling reaction is preferably performed in a liquid comprising water. The coupling reaction is preferably continued for a further period of 16 hours at a temperature of 25°C.

The medium of the ink may be a low melting point solid medium, but is preferably a liquid medium. Preferably, the medium is liquid at a temperature of 25°C.

Preferred liquid media include water, a mixture of water and an organic solvent and an organic solvent free from water.

When the liquid medium comprises a mixture of water and an organic solvent, the weight ratio of water to organic solvent is preferably from 99:1 to 1:99, more preferably from 99:1 to 50:50 and especially from 95:5 to 70:30.

It is preferred that the organic solvent present in the mixture of water and organic solvent is a water-miscible organic solvent or a mixture of such solvents. Preferred water-miscible organic solvents include C₁₋₆-alkanols, preferably methanol, ethanol, n-propanol, isopropanol, n-butanol, sec-butanol, tert-butanol, n-pentanol, cyclopentanol and cyclohexanol; linear amides, preferably dimethylformamide or dimethylacetamide; ketones and ketone-alcohols, preferably acetone, methyl ether ketone, cyclohexanone and diacetone alcohol; water-miscible ethers, preferably tetrahydrofuran and dioxane; diols, preferably diols having from 2 to 12 carbon atoms, for example pentane-1,5-diol, ethylene glycol, propylene glycol, butylene glycol, pentylene glycol, hexylene glycol and thiodiglycol and oligo- and poly-alkyleneglycols, preferably diethylene glycol, triethylene glycol, polyethylene glycol and polypropylene glycol; triols, preferably glycerol and 1,2,6-hexanetriol; mono-C₁₋₄-alkyl ethers of diols, preferably mono-C₁₋₄-alkyl ethers of diols having 2 to 12 carbon atoms, especially 2-methoxyethanol, 2-(2-methoxyethoxy)ethanol, 2-(2-ethoxyethoxy)-ethanol, 2-[2-(2-methoxyethoxy)ethoxy]ethanol, 2-[2-(2-ethoxyethoxy)-ethoxy]-ethanol and ethyleneglycol monoallylether; cyclic amides, preferably 2-pyrrolidone, N-methyl-2-pyrrolidone, N-ethyl-2-pyrrolidone, caprolactam and 1,3-dimethylimidazolidone; cyclic esters, preferably caprolactone; sulphoxides, preferably dimethyl sulphoxide and sulpholane. Preferably, the liquid medium comprises water and 2 or more, especially from 2 to 8, water-miscible organic solvents.

Especially preferred water-miscible organic solvents are cyclic amides, especially 2-pyrrolidone, N-methyl-pyrrolidone and N-ethyl-pyrrolidone; diols, especially 1,5-pentane diol, ethyleneglycol, thiodiglycol, diethyleneglycol and triethyleneglycol; and mono- C₁₋₄-alkyl and di- C₁₋₄-alkyl ethers, of diols, more preferably mono- C₁₋₄-alkyl ethers of diols having 2 to 12 carbon atoms, especially 2-methoxy-2-ethoxy-2-ethoxyethanol.

A preferred liquid medium comprises:
(a) from 75 to 95 parts water; and
(b) from 25 to 5 parts in total of one or more organic solvents selected from diethylene glycol, 2-pyrrolidone, thiodiglycol, N-methylpyrrolidone, cyclohexanol, caprolactone, caprolactam and pentane-1,5-diol;
wherein the parts are by weight and the sum of the parts (a) and (b) = 100.

Examples of further suitable ink media comprising a mixture of water and one or more organic solvents are described in US 4,963,189, US 4,703,113, US 4,626,284 and EP 4,251,50A.

When the liquid medium comprises an organic solvent free from water, (i.e. less than 1% water by weight) the organic solvent preferably has a boiling point of from 30° to 200°C, more preferably of from 30° to 150°C, especially from 30 to 125°C. The organic solvent may be water-immiscible, water-miscible or a mixture of such solvents. Preferred water-miscible organic solvents are any of the hereinbefore described water-miscible organic solvents and mixtures thereof. Preferred water-immiscible solvents include, for example, aliphatic hydrocarbons; ester, preferably ethyl acetate; chlorinated hydrocarbons, preferably CH₂Cl₂; and ethers, preferably diethyl ether; and mixtures thereof.

When the liquid medium comprises a water-immiscible organic solvent, preferably a polar solvent is included because this enhances solubility of the compound of Formula (1) or a salt thereof in the liquid medium. Examples of polar solvents include C₁₋₄-alcohols and ketones

In view of the foregoing preferences it is especially preferred that where the liquid medium is an organic solvent free from water it comprises a ketone (especially methyl ethyl ketone) and/or an alcohol (especially a C₁₋₄-alkanol, more especially ethanol or propanol).

The organic solvent free from water may be a single organic solvent or a mixture of two or more organic solvents. It is preferred that when the medium is an organic solvent free from water it is a mixture of 2 to 5 different organic solvents. This allows a medium to be selected which gives good control over the drying characteristics and storage stability of the ink.

Ink media comprising an organic solvent free from water are particularly useful when fast drying times are required and particularly when printing onto hydrophobic and non-absorbent substrates, for example plastics, metal and glass.

Preferably, the low melting point solid is solid at 25°C and melts at a temperature above 50°C. More preferably, the low melting point solid has a melting point in the range from 60°C to 125°C.

Suitable media which melt in this temperature range include long chain fatty acids, sulfonamides or alcohols, preferably those having C₁₈-₂₄ chains. The compound of Formula (1) or a salt thereof may be dissolved in the low melting point solid or may be finely dispersed in it.

The ink may also contain additional components suitable for use in ink jet printing inks, for example viscosity and surface tension modifiers, corrosion inhibitors, biocides, kogation reducing additives and surfactants.

Preferred ink jet printers include thermal and piezo ink jet printers.

The image printed on the substrate may take the form of text, drawings, photographs and the like.

According to a third aspect of the present invention there is provided an ink comprising a compound of Formula (1) or a salt thereof according to the second aspect of the present invention and a medium. The medium is as hereinbefore described.

The ink may comprise one or more compounds of Formula (1) or salts thereof.

Preferably, the ink according to the third aspect of the present invention comprises:
a) from 0.01 to 30 parts of one or more compounds of the Formula (1) or a salt thereof according to the second aspect of the present invention; and
b) from 70 to 99.99 parts of a liquid medium or a low melting point solid medium;
wherein all parts are by weight and the number of parts of (a)+(b)=100.

The number of parts of component (a) is preferably from 0.1 to 20, more preferably from 0.5 to 15, and especially from 1 to 10 parts. The number of parts of component (b) is preferably from 99.9 to 80, more preferably from 99.5 to 85, especially from 99 to 90 parts.

Preferably, component (a) is completely dissolved in component (b). Preferably, component (a) has a solubility in component (b) at 20°C of at least 3%, more preferably at least 5% and especially at least 10% by weight relative to the total ink. This allows the preparation of concentrates which may be used to prepare more dilute inks and reduces the chance of the compound of Formula (1) or a salt thereof precipitating if evaporation of the liquid medium occurs during storage.

The viscosity of the ink is preferably less than 50mPa.s, more preferably less that 20mPa.s and especially less than 5mPa.s. The viscosity is preferably measured at a temperature of 25°C. Preferably, the viscosity is measured by means of a cone and plate rheometer at a shear rate corresponding to 100rpm. Preferably, the ink is Newtonian in its viscosity behaviour (i.e. the viscosity is insensitive to shear rate).

Preferably, the ink contains less than 1%, more preferably less than 0.1 % and especially less than 0.01% by weight of material having a particle size of greater than 1 micron in size. This can be achieved, for example, by filtration or centrifugation.

Preferably, the ink has been filtered through a filter having an average pore size of less than 10 microns. More preferably the ink has been filtered through a filter having an average pore size of from 10 to 0.2, more preferably from 5 to 1 micron.

Preferably, the ink has a concentration of halide ions of less than 500 parts per million and more preferably less than 100 parts per million. It is especially preferred that the ink has less than 100, more preferably less than 50 parts per million in total of divalent and trivalent metals. Parts per million refer to parts by weight of the relevant ions or metals relative to the total weight of the ink. Any suitable means to remove halide ions and/or di and trivalent metals may be employed, e.g. ion exchange and ultrafiltration.

Preferably, the ink is aqueous and has a conductivity of less than 50µS/cm

Preferably, the ink has a pH of from 5 to 10, more preferably from 7 to 10.

According to a fourth aspect of the present invention there is provided a substrate (preferably paper, an overhead projector slide or a textile material) printed with an ink according to the third aspect of the present invention.

Preferred substrates are those having a receptor layer for the ink. The receptor layer may be porous or non-porous.

According to a fifth aspect of the present invention there is provided an ink jet printer cartridge comprising a chamber and ink, wherein the ink is present in the chamber and the ink is according to the third aspect of the present invention.

The present invention is illustrated by the following examples wherein all parts are by weight unless otherwise stated.

### Example

### Example 1 : Preparation of Dye (1)

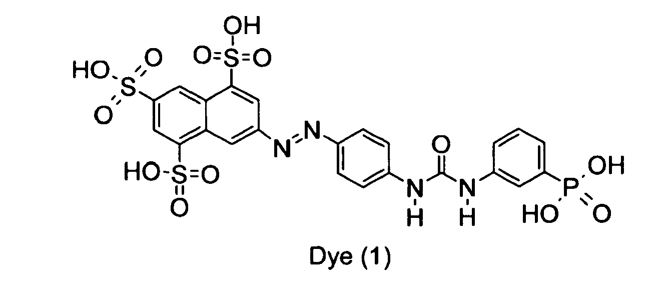

### Dye (1) was prepared according to the stages (a) to (c):

### Stage (a): Preparation of Intermediate (1 a)

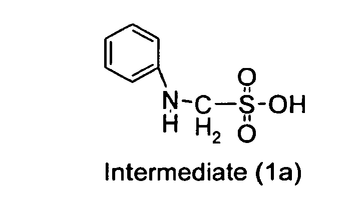

Analine (511g, 5.5mol) was added slowly to a solution of formaldehyde / sodium bisulfite addition compound (740g, 5.5mol) in water (1000ml) at a temperature of 40°C to form a reaction mixture.

The reaction mixture was stirred for 3 hours at a temperature of 50°C, then sodium chloride (100g) was added and the reaction mixture was stirred for a further 3 hours whilst allowing the reaction mixture to cool to a temperature of 25°C.

The product precipitated. The product was collected by filtration, washed with 3x300mls of methylated spirit and dried to give 970g of Intermediate (1 a) in the form of a white solid.

### Stage (b): Preparation of Intermediate (1b)

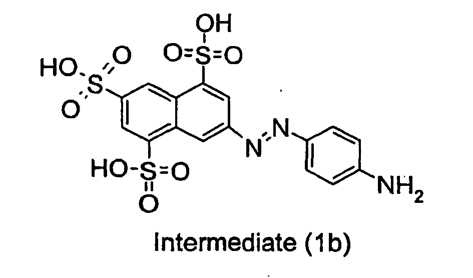

7-aminonaphthalene-1.3,5-trisulfonic acid (76.6g, 1.0mol) was dissolved in water (800ml) and this was adjusted to a pH of 7 by the addition of 2N sodium hydroxide solution, then sodium nitrite (13.8g, 0.2 mol) was added to form a solution.

The above solution was added dropwise to a mixture of concentrated sulphuric acid (60g) and water (150ml) at a temperature of from 0 to 5°C to form a reaction mixture.

The reaction mixture was stirred for a period of 2 hours at a temperature of from 0 to 5°C. Intermediate (1 a) from stage (a) (37.4g, 0.2 mol) was added in portions over a period of 1 hour to the reaction mixture at a temperature of from 0 to 5°C, the pH was adjusted to 4-5 by the addition of sodium acetate. The reaction mixture was stirred for a further period of 4 hours still at a temperature of from 0 to 5°C. Sodium hydroxide (100g) was added to the reaction mixture which was then stirred at a temperature of 80°C for a period of 6 hours.

The reaction mixture was allowed to cool to a temperature of 25°C and the product was then precipitated by the addition of sodium chloride (200g). The product was collected by filtration and dried to give Intermediate (1b) 35g in the form of an orange coloured solid.

### Stage (c): Preparation of Dye (1)

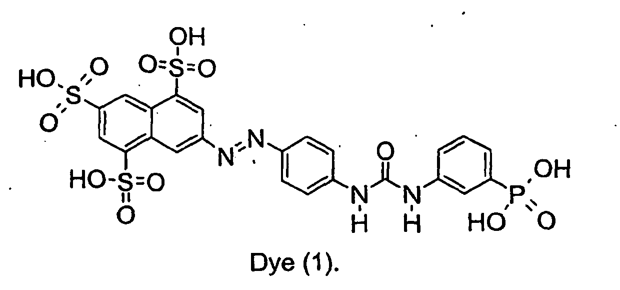

Phenyl chloroformate (17.3g, 0.11 mol) was added dropwise at a temperature of 0 to 5°C to a solution of intermediate (1b) (48.7g, 0.1 mol) in a mixture of water (1000mls) and N-methyl pyrrolidone (150mls) to form a reaction mixture.

The reaction mixture was stirred at a temperature of 0 to 5°C for a period of 2 hours whilst maintaining a pH of about 6.5 by adding 2N sodium hydroxide solution.

A solution of 3-aminophenylphosphonic acid (34.6g, 0.2mol) in water was added to the reaction mixture. The reaction mixture was stirred for a further 10 hours at a temperature of 50°C.

The product was isolated by evaporation using reduced pressure. The isolated product was washed with acetone (3000ml) and then dissolved in water (1000mls) which was then adjusted to a pH of about 8 to 9 by the addition of 2N sodium hydroxide solution. The product was precipitated by the addition of sodium chloride and by acidification of the solution to a pH of 1 using HCl.

The precipitated product was collected by filtration and dissolved in water (500mls) to form a solution which was then adjusted to a pH of 8 to 9 using 2N sodium hydroxide solution. The product was purified by dialysing the solution using membrane tubing to a conductivity of less than 50µS/cm. The purified product was isolated by evaporation at a temperature of 60°C to prepare 30g of Dye (1) in the form of a brown powder. Dye (1) was obtained in the form of the sodium salt.

Dye (1) may be used to prepare aqueous ink jet printing inks which when printed exhibit particularly good ozone fastness. Aqueous inks containing Dye (1) had good light fastness and were a vivid, bright yellow colour.

### Inks

The inks described in Tables I and II may be prepared wherein the Dye described in the first column is Dye (1) made in Example 1. Numbers quoted in the second column onwards refer to the number of parts of the relevant ingredient and all parts are by weight. The inks may be applied to paper by thermal or piezo ink jet printing.

The following abbreviations are used in Table I and II:
PG = propylene glycol
DEG = diethylene glycol
NMP = N-methyl pyrrolidone
DMK = dimethylketone
IPA = isopropanol
MEOH = methanol
2P = 2-pyrrolidone
MIBK = methylisobutyl ketone
P12 = propane-1,2-diol
BDL = butane-2,3-diol
CET= cetyl ammonium bromide
PHO = Na₂HPO₄ and
TBT = tertiary butanol
TDG = thiodiglycol

**TABLE 1**

| Dye | Dye Content | Water | PG | DEG | NMP | DMK | NaOH | Na Stearate | IPA | MEOH | 2P | MIBK |
|---|---|---|---|---|---|---|---|---|---|---|---|---|
| 1 | 2.0 | 80 | 5 | | 6 | 4 | | | | | 5 | |
| 1 | 3.0 | 90 | | 5 | 5 | | 0.2 | | | | | |
| 1 | 10.0 | 85 | 3 | | 3 | 3 | | | | 5 | 1 | |
| 1 | 2.1 | 91 | | 8 | | | | | | | | 1 |
| 1 | 3.1 | 86 | 5 | | | | | 0.2 | 4 | | | 5 |
| 1 | 1.1 | 81 | | | 9 | | 0.5 | 0.5 | | | 9 | |
| 1 | 2.5 | 60 | 4 | 15 | 3 | 3 | | | 6 | 10 | 5 | 4 |
| 1 | 5 | 65 | | 20 | | | | | 10 | | | |
| 1 | 2.4 | 75 | 5 | 4 | | 5 | | | | 6 | | 5 |
| 1 | 4.1 | 80 | 3 | 5 | 2 | 10 | | 0.3 | | | | |
| 1 | 3.2 | 65 | | 5 | 4 | 6 | | | 5 | 4 | 6 | 5 |
| 1 | 5.1 | 96 | | | | | | | | 4 | | |
| 1 | 10.8 | 90 | 5 | | | | | | 5 | | | |
| 1 | 10.0 | 80 | 2 | 6 | 2 | 5 | | | 1 | | 4 | |
| 1 | 1.8 | 80 | | 5 | | | | | | | 15 | |
| 1 | 2.6 | 84 | | | 11 | | | | | | 5 | |
| 1 | 3.3 | 80 | 2 | | | 10 | | | | 2 | | 6 |
| 1 | 12.0 | 90 | | | | 7 | 0.3 | | 3 | | | |
| 1 | 5.4 | 69 | 2 | 20 | 2 | 1 | | | | | 3 | 3 |
| 1 | 6.0 | 91 | | | 4 | | | | | | 5 | |

**TABLE II**

| Dye | Dye Content | Water | PG | DEG | NMP | CET | TBT | TDG | BDL | PHO | 2P | Pl2 |
|---|---|---|---|---|---|---|---|---|---|---|---|---|
| 1 | 3.0 | 80 | 15 | | | 0.2 | | | | | 5 | |
| 1 | 9.0 | 90 | | 5 | | | | | | 1.2 | | 5 |
| 1 | 1.5 | 85 | 5 | 5 | | 0.15 | 5.0 | 0.2 | | | | |
| 1 | 2.5 | 90 | | 6 | 4 | | | | | 0.12 | | |
| 1 | 3.1 | 82 | 4 | 8 | | 0.3 | | | | | | 6 |
| 1 | 0.9 | 85 | | 10 | | | | | 5 | 0.2 | | |
| 1 | 8.0 | 90 | | 5 | 5 | | | 0.3 | | | | |
| 1 | 4.0 | 70 | | 10 | 4 | | | | 1 | | 4 | 11 |
| 1 | 2.2 | 75 | 4 | 10 | 3 | | | | 2 | | 6 | |
| 1 | 10.0 | 91 | | | 6 | | | | | | 3 | |
| 1 | 9.0 | 76 | | 9 | 7 | | 3.0 | | | 0.95 | 5 | |
| 1 | 5.0 | 78 | 5 | 11 | | | | | | | 6 | |
| 1 | 5.4 | 86 | | | 7 | | | | | | 7 | |
| 1 | 2.1 | 70 | 5 | 5 | 5 | 0.1 | 0.2 | 0.1 | 5 | 0.1 | 5 | |
| 1 | 2.0 | 90 | | 10 | | | | | | | | |
| 1 | 2 | 88 | | | | | | 10 | | | | |
| 1 | 5 | 78 | | | 5 | | | 12 | | | 5 | |
| 1 | 8 | 70 | 2 | | 8 | | | 15 | | | 5 | |
| 1 | 10 | 80 | | | | | | 8 | | | 12 | |
| 1 | 10 | 80 | | 10 | | | | | | | | |

## Claims

1. A process for printing an image on a substrate comprising applying to the substrate an ink comprising a medium and a mono azo compound of Formula (1) or a salt thereof: 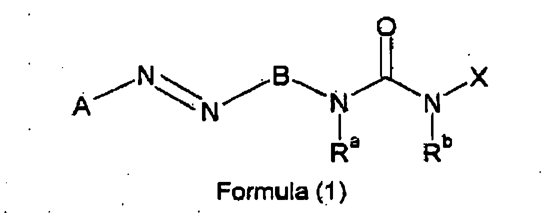 wherein:
A and X are independently optionally substituted aryl or heteroaryl;
B is independently optionally substituted arylene or heteroarylene, in either case comprising, a phenylene ring which is attached to the -N=N- and -NR^{a}- groups in the compound of Formula (1) or a salt thereof in the para positions;
R³ and R^{b} are independently H, optionally substituted alkyl or optionally substituted aryl;
the compound of Formula (1) or a salt thereof is soluble In water at a temperature of 20°C and has from 1 to 10 groups selected from polyethylene oxide, sulphonamide, phosphonic acid, sulfonic acid, and carboxylic acid groups.; and
the ink is applied to the substrate by means of an ink jet printer.

2. A process according to claims 1 wherein the compound of Formula (1) or a salt thereof has no fibre reactive groups selected from from halo -1, 3, 5-triazinyl, halo-pyrimidyl, beta-halo-propionyl, beta-halo ethyl-sulphonyl, beta-sulfonic acid ethyl-sulfonyl; beta-halo ethylsulfamyl chloroacetyl amino, beta-sulfonc acid ethyl sulphamyl and vinyl sulphonyl groups.

3. A process according to any one of the preceding claims wherein the groups represented by A, 8 and X are each independently unsubstituted or substituted with one or more substituents selected from the group consisting of optionally substituted alkyl, alkoxy, amine, amide, ester, ketone and thioether groups, halo, acid, hydroxy, nitro, cyano and -CF₃ groups and when present the alkoxy, amine, amide, ester, ketone and thioether groups are unsubstituted or substituted with one or more groups selected from halo, amino, C₁₋₄-alkoxy, hydroxy, sulfonic acid, carboxylic acid and phosphonic acid groups.

4. A process according to any one of the preceding claims wherein the compound of Formula (1) or a salt thereof has from 1 to 10 groups selected from phosphonic acid, sulfonic acid and carboxylic acid.

5. A process according to any one of the preceding claims wherein the compound of Formula (1) or a salt thereof has at least one sulfonic acid group.

6. A process according to any one of the preceding claims wherein the compound of Formula (1) or a salt thereof has one or more phosphonic acid groups.

7. A process according to claim 6 wherein X has at least one phosphonic acid group.

8. A process according to claim 7 wherein X is a phenyl group substituted with a phosphonic acid group in the meta position with respect to the point of attachment of the phenyl group to the -NR^{b}- group in the compound of Formula (1) or a salt thereof.

9. A process according to any one of the preceding claims wherein the group represented by B is an unsubstituted phenylene group.

10. A process according to any one of the preceding claims wherein the medium is a liquid.

11. A mono azo compound of Formula (1) or a salt thereof: 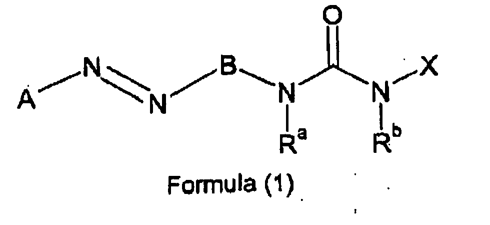 wherein:
A and X are independently optionally substituted aryl or heteroaryl;
B is independently optionally substituted arylene or heteroarylene, in either case comprising a phenylene ring which is attached to the -N=N= and -NR^{a}- groups in the compound of Formula (1) or a salt thereof in the para positions;
R^{a} and R^{b} are independently H, optionally substituted alkyl or optionally substituted aryl; and
the compound of Formula (1) or salt thereof is soluble in water at a temperature of 20°C and has:
a) from 1 to 10 groups selected from polyethylene oxide, sulphonamide, phosphonic acid, sulfonic acid, and carboxylic acid groups:
b) no fibre reactive groups selected from halo =1, 3, 5-triazinyl, halo-pyrimidyl, beta-halo-propionyl, beta-halo ethyl-sulphonyl, beta-sulfohic acid ethyl-sulfonyl, beta-halo ethylsulfamyl, chloroacetyl amino, beta-sulfonic acid ethyl sulphamyl and vinyl sulphonyl groups; and
c) no hydroxy groups attached to a benzene ring.

12. A. compound or salt thereof according to claim 11 wherein the groups represented by A, B and X are each independently unsubstituted or substituted with one or more substituents selected from the group consisting of optionally substituted alkyl, alkoxy, amine, amide, ester, ketone and thioether groups, halo, acid, hydroxy, nitro, cyano and -CF₃ groups and when present the alkoxy, amine, amide, ester, ketone and thioether groups are unsubstituted or substituted with one or more groups selected from halo, amino, C₁₋₄-alkoxy, hydroxy, sulfonic acid, carboxylic acid and phosphonic acid groups.

13. A compound or a salt thereof according to claim 11 which has at least one phosphonic acid group.

14. A compound or a salt thereof according to any one of claims 11 to 13
wherein X is a phenyl group substituted with a phosphonic acid group in the meta position with respect to the point of attachment of the phenyl group to the -NR^{b}-group in the compound of Formula (1) or a salt thereof.

15. A compound or a salt thereof according to any one of claims 11 to 14 wherein the group represented by B is phenylene.

16. A compound or a salt thereof according to any one of claims 11 to 15 which has at least one sulfonic acid group.

17. A compound or a salt thereof according to claim 11 which is of any one of Formulae (12) to (15) or a salt thereof:

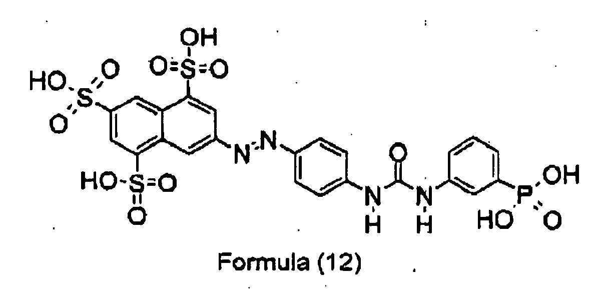

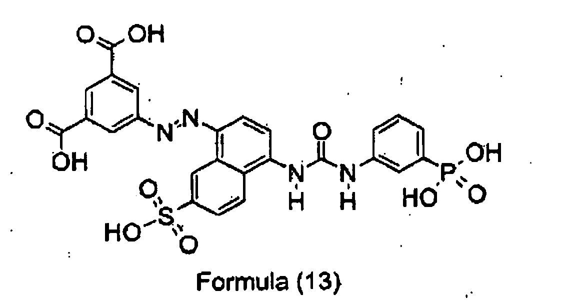

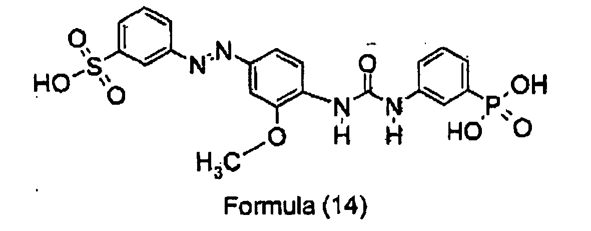

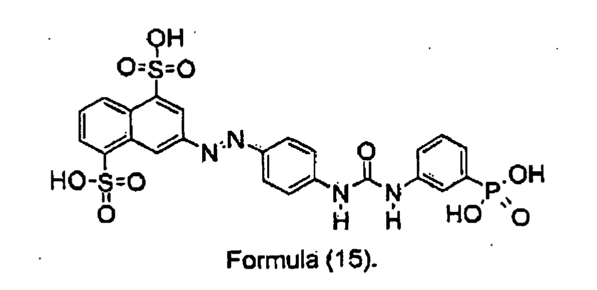

18. A compound or a salt thereof according to claim 11 which is any one of the compounds of Formulae (8) to (11) or a salt thereof:

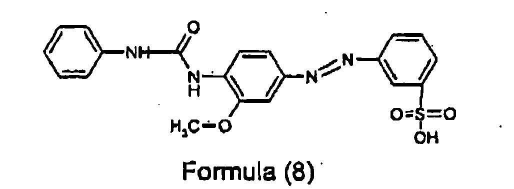

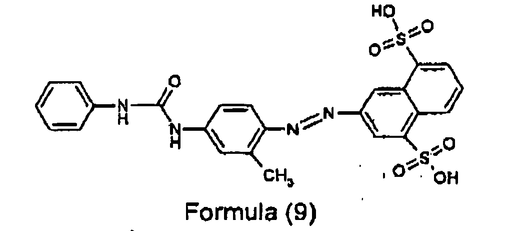

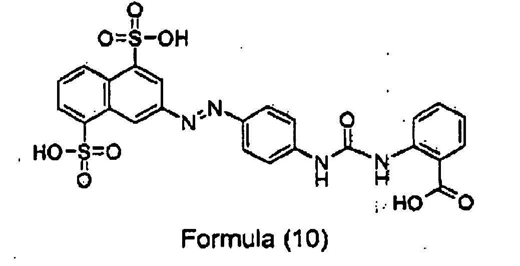

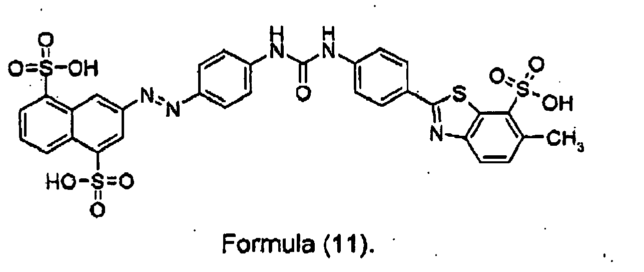

19. An ink comprising a compound or a salt thereof according to any one of claims 11 to 18 and a medium.

20. An ink according to claim 19 wherein the medium is a liquid.

21. A substrate printed with an ink according to claim 19 or 20.

22. An ink jet printer cartridge comprising a chamber and ink, wherein the ink is present in the chamber and the ink is according to claim 19 or 20.

## Patentansprüche

1. Verfahren zur druckmäßigen Bebilderung eines Substrats, bei dem man dieses farbstrahldruckermäßig mit einer Tinte, umfassend ein Medium und eine Monoazoverbindung der Formel (1) oder ein Salz davon: 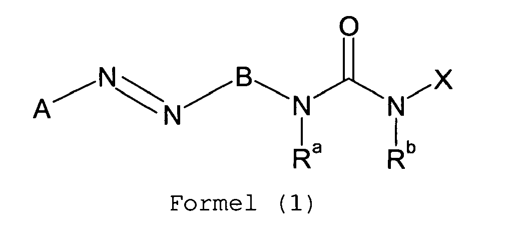 in der die Formelglieder die folgende Bedeutung haben:
A und X sind unabhängig voneinander gegebenenfalls substituiertes Aryl oder Heteroaryl;
B ist unabhängig gegebenenfalls substituiertes Arylen oder Heteroarylen, das jeweils einen mit den Gruppen -N=N- und -NR^{a}- in der Verbindung der Formel (1) oder in einem Salz davon jeweils in para-Stellung verbundenen Phenylenring enthält;
R^{a} und R^{b} sind unabhängig voneinander H, gegebenenfalls substituiertes Alkyl oder gegebenenfalls substituiertes Aryl;
wobei die Verbindung der Formel (1) oder ein Salz davon in Wasser von 20°C löslich ist und 1 bis 10 Gruppen ausgewählt aus Polyethylenoxid-, Sulfonamid-, Phosphonsäure-, Sulfonsäure- und Carbonsäuregruppen, aufweist;
beaufschlagt.

2. Verfahren nach Anspruch 1, bei dem die Verbindung der Formel (1) oder ein Salz davon keine faserreaktiven Gruppen, ausgewählt aus Halogen-1,3,5-triazinyl-, Halogenpyrimidyl-, beta-Halogenpropionyl-, beta-Halogenethylsulfonyl-, beta-Sulfonsäureethylsulfonyl-, beta-Halogenethylsulfamyl-, Chloracetylamino-, beta-Sulfonsäureethylsulfamyl- und Vinylsulfonylgruppen, ausweist.

3. Verfahren nach einem der vorhergehenden Ansprüche, bei dem die für A, B und X stehenden Gruppen jeweils unabhängig voneinander nicht substituiert oder mit gegebenenfalls substituierten Alkyl-, Alkoxy-, Amin-, Amid-, Ester-, Keton- und Thioethergruppen, Halogen-, Säure-, Hydroxy-, Nitro-, Cyano- und -CF₃-Gruppen ein- oder mehrfach, gleich oder verschieden substituiert sind, wobei die Alkoxy-, Amin-, Amid-, Ester-, Keton- und Thioethergruppen gegebenenfalls nicht substituiert oder mit Halogen-, Amino-, C₁₋₄-Alkoxy-, Hydroxy-, Sulfonsäure-, Carbonsäure- und Phosphonsäuregruppen ein- oder mehrfach, gleich oder verschieden substituiert sind.

4. Verfahren nach einem der vorhergehenden Ansprüche, bei dem die Verbindung der Formel (1) oder ein Salz davon 1 bis 10 Gruppen, ausgewählt aus Phosphonsäure, Sulfonsäure und Carbonsäure, aufweist.

5. Verfahren nach einem der vorhergehenden Ansprüche, bei dem die Verbindung der Formel (1) oder ein Salz davon mindestens eine Sulfonsäuregruppe aufweist.

6. Verfahren nach einem der vorhergehenden Ansprüche, bei dem die Verbindung der Formel (1) oder ein Salz davon eine oder mehrere Phosphonsäuregruppen aufweist.

7. Verfahren nach Anspruch 6, bei dem X mindestens eine Phosphonsäuregruppe aufweist.

8. Verfahren nach Anspruch 7, bei dem X eine Phenylgruppe bedeutet, die in meta-Stellung gegenüber der Verknüpfungsstelle der Phenylgruppe mit der -NR^{b}-Gruppe in der Verbindung der Formel (1) oder ein Salz davon mit einer Phosphonsäuregruppe substituiert ist.

9. Verfahren nach einem der vorhergehenden Ansprüche, bei dem es sich bei der für B stehenden Gruppe um eine nicht substituierte Phenylengruppe handelt.

10. Verfahren nach einem der vorhergehenden Ansprüche, bei dem man als Medium eine Flüssigkeit einsetzt.

11. Monoazoverbindung der Formel (1) oder ein Salz davon: 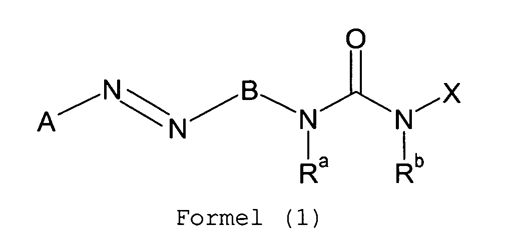 in der die Formelglieder die folgende Bedeutung haben:
A und X sind unabhängig voneinander gegebenenfalls substituiertes Aryl oder Heteroaryl;
B ist unabhängig gegebenenfalls substituiertes Arylen oder Heteroarylen, das jeweils einen mit den Gruppen -N=N- und -NR^{a}- in der Verbindung der Formel (1) oder in einem Salz davon jeweils in para-Stellung verbundenen Phenylenring enthält;
R^{a} und R^{b} sind unabhängig voneinander H, gegebenenfalls substituiertes Alkyl oder gegebenenfalls substituiertes Aryl;
wobei die Verbindung der Formel (1) oder ein Salz davon in Wasser von 20°C löslich ist und
a) 1 bis 10 Gruppen ausgewählt aus Polyethylenoxid-, Sulfonamid-, Phosphonsäure-, Sulfonsäure- und Carbonsäuregruppen;
b) keine faserreaktiven Gruppen, ausgewählt aus Halogen-1,3,5-triazinyl-, Halogenpyrimidyl-, beta-Halogenpropionyl-, beta-Halogenethylsulfonyl-, beta-Sulfonsäureethylsulfonyl-, beta-Halogenethylsulfamyl-, Chloracetylamino-, beta-Sulfonsäureethylsulfamyl- und Vinylsulfonylgruppen und
c) keine mit einem Benzolring verbundene Hydroxygruppen aufweist.

12. Verbindung oder Salz davon nach Anspruch 11, bei der die für A, B und X stehenden Gruppen jeweils unabhängig voneinander nicht substituiert oder mit gegebenenfalls substituierten Alkyl-, Alkoxy-, Amin-, Amid-, Ester-, Keton- und Thioethergruppen, Halogen-, Säure-, Hydroxy-, Nitro-, Cyano- und -CF₃-Gruppen ein- oder mehrfach, gleich oder verschieden substituiert sind, wobei die Alkoxy-, Amin-, Amid-, Ester-, Keton- und Thioethergruppen gegebenenfalls nicht substituiert oder mit Halogen-, Amino-, C₁₋₄-Alkoxy-, Hydroxy-, Sulfonsäure-, Carbonsäure- und Phosphonsäuregruppen ein- oder mehrfach, gleich oder verschieden substituiert sind.

13. Verbindung oder Salz davon nach Anspruch 11 mit mindestens einer Phosphonsäuregruppe.

14. Verbindung oder Salz davon nach einem der Ansprüche 11 bis 13, bei der X eine Phenylgruppe bedeutet, die in meta-Stellung gegenüber der Verknüpfungsstelle der Phenylgruppe mit der -NR^{b}-Gruppe in der Verbindung der Formel (1) oder ein Salz davon mit einer Phosphonsäuregruppe substituiert ist.

15. Verbindung oder Salz davon nach einem der Ansprüche 11 bis 14, bei der es sich bei der für B stehenden Gruppe um Phenylen handelt.

16. Verbindung oder Salz davon nach einem der Ansprüche 11 bis 15 mit mindestens einer Sulfonsäuregruppe.

17. Verbindung oder Salz davon nach Anspruch 11, entsprechend einer der Formeln (12) bis (15) oder Salz davon:

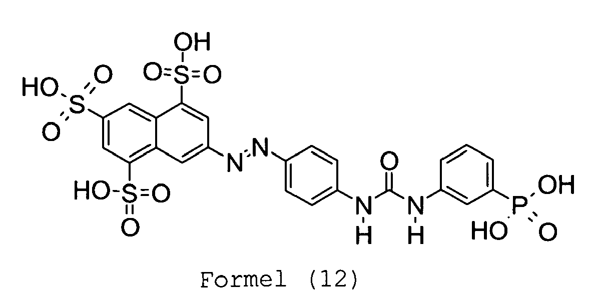

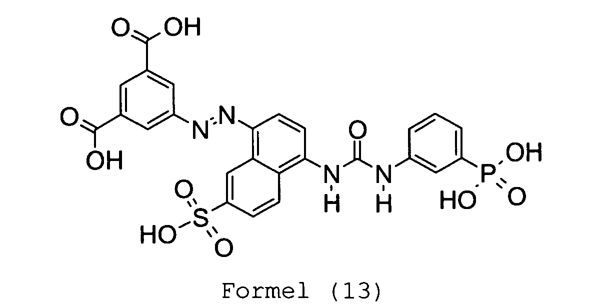

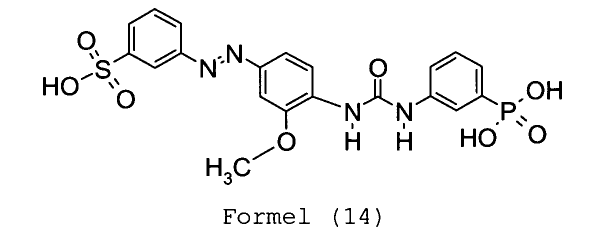

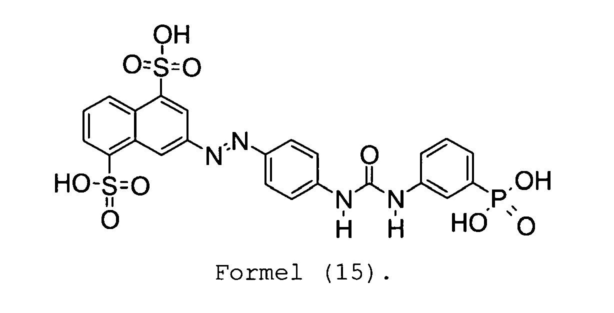

18. Verbindung oder Salz davon nach Anspruch 11, entsprechend einer der Verbindungen der Formeln (8) bis (11) oder Salz davon:

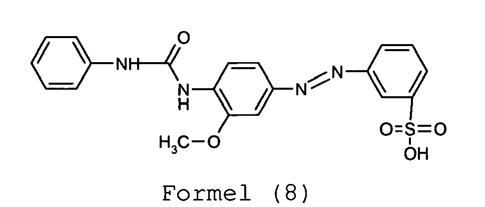

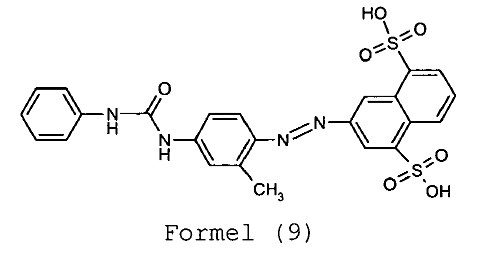

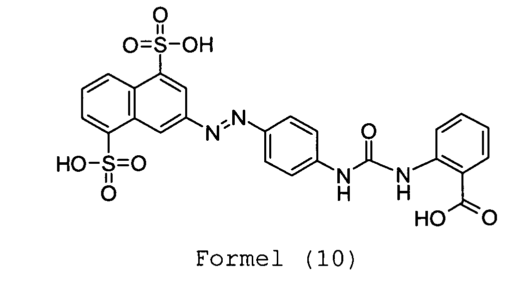

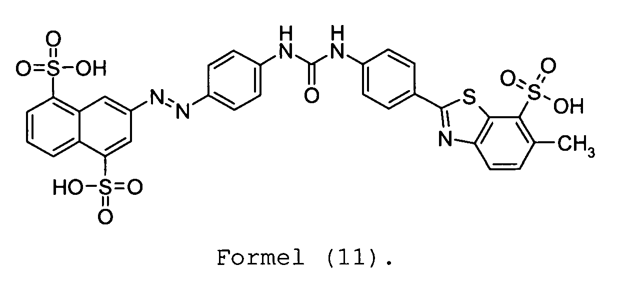

19. Tinte, umfassend eine Verbindung oder Salz davon gemäß einem der Ansprüche 11 bis 18 und ein Medium.

20. Tinte nach Anspruch 19, bei der es sich bei dem Medium um eine Flüssigkeit handelt.

21. Substrat, bedruckt mit einer Tinte gemäß Anspruch 19 oder 20.

22. Farbstrahldruckerpatrone mit Kammer und Tinte, bei der die Tinte in der Kammer enthalten ist und Anspruch 19 oder 20 entspricht.

## Revendications

**1.** Procédé d'impression d'une image sur un substrat qui comprend l'application sur le substrat d'une encre qui comprend un milieu et un composé mono-azoïque de la formule (1) ou un sel de celui-ci : 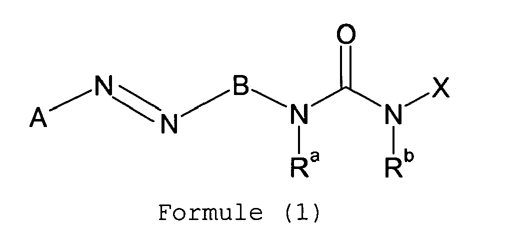 dans laquelle :
A et X représentent indépendamment un groupe aryle ou hétéroaryle éventuellement substitué ;
B représente indépendamment un groupe arylène ou hétéroarylène éventuellement substitué, comprenant dans les deux cas un noyau phénylène qui est attaché aux groupes -N=N- et -NR^{a}- dans le composé de la formule (1) ou un sel de celui-ci dans les positions para ;
R^{a} et R^{b} représentent indépendamment un atome H, un groupe alkyle éventuellement substitué ou un groupe aryle éventuellement substitué ;
le composé de la formule (1) ou un sel de celui-ci est soluble dans l'eau à une température de 20 °C et possède d'un à dix groupes choisis parmi les groupes oxyde de polyéthylène, sulfonamide, acide phosphonique, acide sulfonique et acide carboxylique ; et
l'encre est appliquée au substrat au moyen d'une imprimante à jet d'encre.

**2.** Procédé selon la revendication 1, dans lequel le composé de la formule (1) ou un sel de celui-ci ne possède aucun groupe réactif avec des fibres choisi parmi les groupes halogéno-1,3,5-triazinyle, halogéno-pyrimidyle, bêta-halogéno-propionyle, bêta-halogéno-éthylsulfonyle, éthylsulfonyle d'acide bêta-sulfonique, bêta-halogéno-éthylsulfamyle, chloroacétylamino, éthylsulfamyle d'acide bêta-sulfonique et vinylsulfonyle.

**3.** Procédé selon l'une quelconque des revendications précédentes, dans lequel les groupes représentés par A, B et X sont chacun indépendamment non substitués ou substitués par un ou plusieurs substituants choisis parmi le groupe constitué des groupes alkyle, alcoxy, amine, amide, ester, cétone et thioéther éventuellement substitués, des groupes halogéno, acide, hydroxy, nitro, cyano et -CF₃ et, lorsque présents, les groupes alcoxy, amine, amide, ester, cétone et thioéther sont non substitués ou substitués par un ou plusieurs groupes choisis parmi les groupes halogéno, amino, alcoxy de C₁ à C₄, hydroxy, acide sulfonique, acide carboxylique et acide phosphonique.

**4.** Procédé selon l'une quelconque des revendications précédentes, dans lequel le composé de la formule (1) ou un sel de celui-ci possède d'un à dix groupes choisis parmi l'acide phosphonique, l'acide sulfonique et l'acide carboxylique.

**5.** Procédé selon l'une quelconque des revendications précédentes, dans lequel le composé de la formule (1) ou un sel de celui-ci possède au moins un groupe acide sulfonique.

**6.** Procédé selon l'une quelconque des revendications précédentes, dans lequel le composé de la formule (1) ou un sel de celui-ci possède un ou plusieurs groupes acide phosphonique.

**7.** Procédé selon la revendication 6, dans lequel X possède au moins un groupe acide phosphonique.

**8.** Procédé selon la revendication 7, dans lequel X représente un groupe phényle substitué par un groupe acide phosphonique dans la position méta par rapport au point d'attachement du groupe phényle au groupe -NR^{b}-dans le composé de la formule (1) ou un sel de celui-ci.

**9.** Procédé selon l'une quelconque des revendications précédentes, dans lequel le groupe représenté par B est un groupe phénylène non substitué.

**10.** Procédé selon l'une quelconque des revendications précédentes, dans lequel le milieu est un liquide.
Composé mono-azoïque de la formule (1) ou un sel de celui-ci : 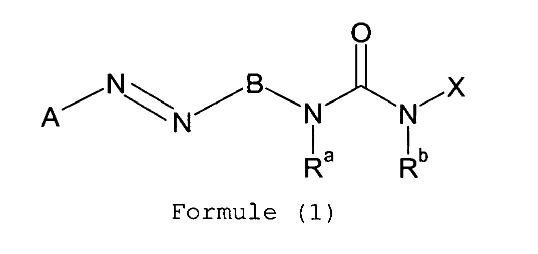 dans laquelle :
A et X représentent indépendamment un groupe aryle ou hétéroaryle éventuellement substitué ;
B représente indépendamment un groupe arylène ou hétéroarylène éventuellement substitué, comprenant dans les deux cas un noyau phénylène qui est attaché aux groupes -N=N- et -NR^{a}- dans le composé de la formule (1) ou un sel de celui-ci dans les positions para ;
R^{a} et R^{b} représentent indépendamment un atome H, un groupe alkyle éventuellement substitué ou un groupe aryle éventuellement substitué ; et
le composé de la formule (1) ou un sel de celui-ci est soluble dans l'eau à une température de 20 °C et possède :
a) d'un à dix groupes choisis parmi les groupes oxyde de polyéthylène, sulfonamide, acide phosphonique, acide sulfonique et acide carboxylique ;
b) aucun groupe réactif avec des fibres choisi parmi les groupes halogéno-1,3,5-triazinyle, halogéno-pyrimidyle, bêta-halogéno-propionyle, bêta-halogéno-éthylsulfonyle, éthylsulfonyle d'acide bêta-sulfonique, bêta-halogéno-éthylsulfamyle, chloroacétylamino, éthylsulfamyle d'acide bêta-sulfonique et vinylsulfonyle ; et
c) aucun groupe hydroxy attaché à un noyau de benzène.

**12.** Composé ou sel de celui-ci selon la revendication 11, dans lequel les groupes représentés par A, B et X sont chacun indépendamment non substitués ou substitués par un ou plusieurs substituants choisis parmi le groupe constitué des groupes alkyle, alcoxy, amine, amide, ester, cétone et thioéther éventuellement substitués, des groupes halogéno, acide, hydroxy, nitro, cyano et -CF₃ et, lorsque présents, les groupes alcoxy, amine, amide, ester, cétone et thioéther sont non substitués ou substitués par un ou plusieurs groupes choisis parmi les groupes halogéno, amino, alcoxy de C₁ à C₄, hydroxy, acide sulfonique, acide carboxylique et acide phosphonique.

**13.** Composé ou sel de celui-ci selon la revendication 11, lequel possède au moins un groupe acide phosphonique.

**14.** Composé ou sel de celui-ci selon l'une quelconque des revendications 11 à 13, dans lequel X représente un groupe phényle substitué par un groupe acide phosphonique dans la position méta par rapport au point d'attachement du groupe phényle au groupe -NR^{b}-dans le composé de la formule (1) ou un sel de celui-ci.

**15.** Composé ou sel de celui-ci selon l'une quelconque des revendications 11 à 14, dans lequel le groupe représenté par B est un groupe phénylène.

**16.** Composé ou sel de celui-ci selon l'une quelconque des revendications 11 à 15, lequel possède au moins un groupe acide sulfonique.

**17.** Composé ou sel de celui-ci selon la revendication 11, lequel est l'un quelconque des composés des formules (12) à (15) ou un sel de celui-ci :

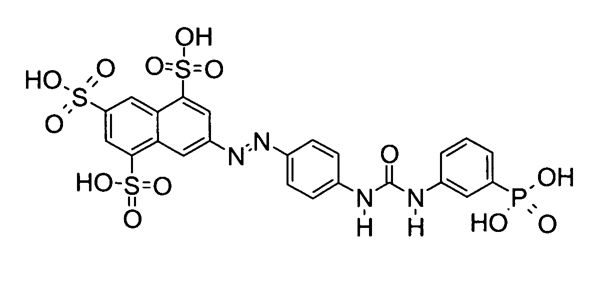

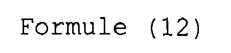

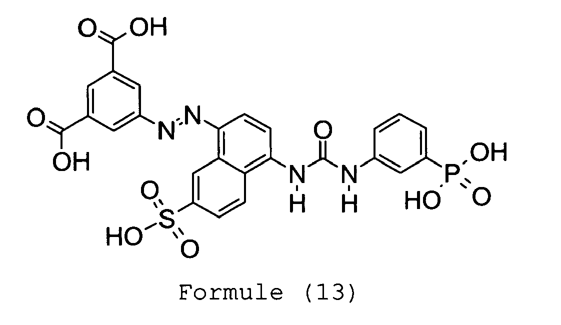

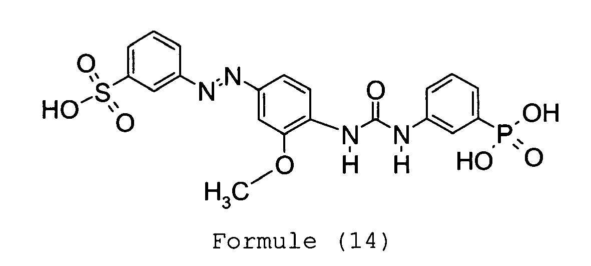

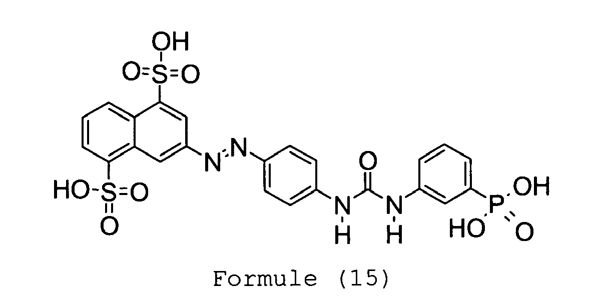

**18.** Composé ou sel de celui-ci selon la revendication 11, lequel est l'un quelconque des composés des formules (8) à (11) ou un sel de celui-ci :

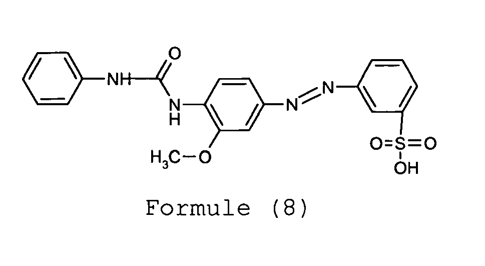

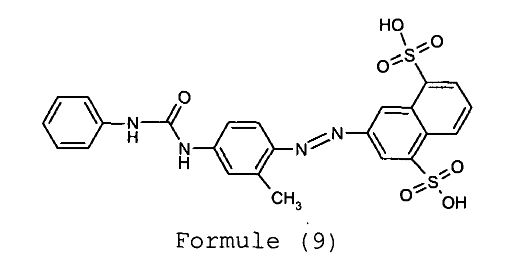

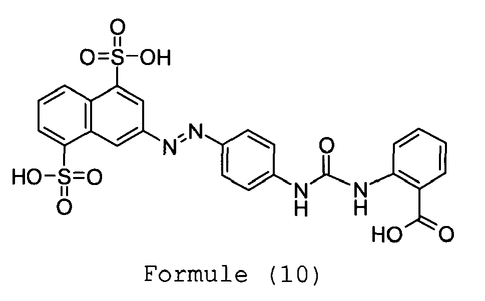

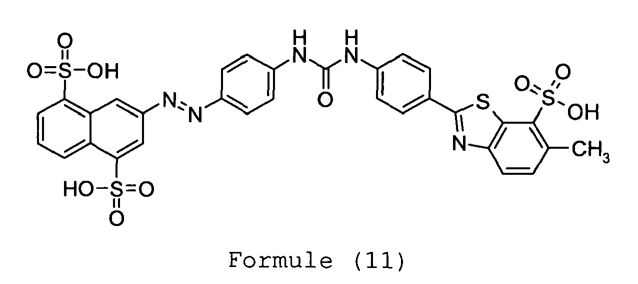

**19.** Encre comprenant un composé ou un sel de celui-ci selon l'une quelconque des revendications 11 à 18 et un milieu.

**20.** Encre selon la revendication 19, dans laquelle le milieu est un liquide.

**21.** Substrat imprimé avec une encre selon la revendication 19 ou 20.

**22.** Cartouche d'imprimante à jet d'encre comprenant une chambre et de l'encre, dans laquelle l'encre est présente dans la chambre et l'encre est selon la revendication 19 ou 20.
